# FASCICULE DE BREVET EUROPEEN

(11) **EP 1 931 863 B1**
(45) Date de publication et mention de la délivrance du brevet: **24.11.2010**
(21) Numéro de dépôt: 06808296.5
(22) Date de dépôt: 08.09.2006
(51) Int. Cl.: F01N 3/025, F01N 11/00

(54) **SYSTEME ET PROCEDE DE REGENERATION D'UN FILTRE A PARTICULES CATALYTIQUE SITUE DANS LA LIGNE D'ECHAPPEMENT D'UN MOTEUR DIESEL**
SYSTEM UND VERFAHREN ZUR ERZEUGUNG EINES KATALYSATORPARTIKELFILTERS IN EINER DIESELMOTOR-ABGASLEITUNG
SYSTEM AND METHOD FOR REGENERATING A CATALYTIC PARTICULATE FILTER LOCATED IN A DIESEL ENGINE EXHAUST LINE

(30) Priorité: 23.09.2005 FR 0509732
(43) Date de publication de la demande: 18.06.2008
(73) Titulaire: Renault SAS, 92100 Boulogne Billancourt (FR)
(72) Inventeur: PLOTON, Violaine, 91640 Machery (FR); THOUVENEL, Nicolas, 91610 Ballancourt (FR)
(86) Numéro de dépôt international: PCT/FR2006/050858
(87) Numéro de publication internationale: WO 2007/034097

(56) Documents cités:
- DE-A1- 10 257 655
- DE-A1- 19 622 757
- FR-A- 2 796 985
- GB-A- 2 311 817
- US-A- 4 665 690

## Description

La présente invention concerne un système et un procédé de régénération d'un filtre à particules catalytique situé dans la ligne d'échappement d'un moteur diesel.

Un filtre à particules catalytique capture des particules de suies émises par le moteur. Pour éviter un colmatage du filtre, des phases périodiques de régénération permettant de brûler les particules piégées. Les particules piégées sont brûlées par élévation de la température des gaz d'échappement.

Il existe des systèmes de régénération de filtre à particules catalytique par injection de carburant à l'échappement, par exemple tel que décrit dans la demande FR 2 796 985 (RENAULT) et la demande de brevet français déposée sous le numéro 04 53 187 (RENAULT). L'injection de carburant est effectuée par un injecteur situé dans la ligne d'échappement d'un moteur diesel, en amont du filtre à particules catalytique. De tels systèmes de régénération d'un filtre à particules catalytique posent de nouveaux risques en cas de défaillance. Cependant ces documents ne divulguent pas de surveillance de l'injecteur situé dans la ligne d'échappement.

En tout cas, une telle surveillance est divulguée dans les documents US 5 709 080 A et EP 1 176 292 A.

Un but de l'invention est de surveiller le bon fonctionnement de l'injecteur disposé dans la ligne d'échappement du véhicule.

Ainsi, selon un aspect de l'invention, il est proposé un système de régénération d'un filtre à particules catalytique situé dans la ligne d'échappement d'un moteur diesel. Le système comprend une unité de commande électronique, un injecteur de carburant commandé disposé en amont du filtre à particules catalytique et alimenté en carburant par une pompe commandée, ainsi qu'un capteur de mesure de la pression d'alimentation en carburant dudit injecteur. Le système comprend, en outre, des moyens de détection d'un blocage en position ouverte dudit injecteur à partir de la pression d'alimentation en carburant dudit injecteur.

En d'autres termes, les moyens de détection détectent un défaut de fonctionnement de l'injecteur lorsqu'il doit se fermer, et qu'il reste bloqué ouvert. Il est alors possible de détecter une défaillance de fonctionnement d'un tel système de régénération d'un filtre à particules catalytique et ainsi de pouvoir éviter des défaillances d'un tel système.

L'invention permet d'améliorer la sécurité des occupants du véhicule par la détection d'une défaillance de l'injecteur disposé en amont du filtre à particules catalytique.

Dans un mode de réalisation préféré, lesdits moyens de détection comprennent des moyens de détermination de délai pour déterminer un délai de chute de la pression d'alimentation en carburant dudit injecteur d'une pression prédéterminée supérieure à une pression prédéterminée inférieure lorsque la pompe d'alimentation est désactivée.

Il est possible de détecter un blocage en position ouverte de l'injecteur à partir du délai nécessaire à la chute de pression prédéterminée, lorsque la pompe d'alimentation est désactivée.

Avantageusement, lesdits moyens de détection comprennent des moyens de comparaison de délai pour comparer ledit délai de chute et un délai de chute prédéterminé.

En outre, lesdits moyens de détection sont adaptés pour détecter un blocage en position ouverte dudit injecteur lorsque ledit délai de chute est inférieur audit délai de chute prédéterminé.

Avantageusement, lesdits moyens de détection comprennent des moyens de comparaison de pression pour comparer la pression d'alimentation en carburant dudit injecteur et une pression d'erreur prédéterminée, inférieure à ladite pression prédéterminée inférieure.

Dans un mode de réalisation référé, lesdits moyens de détection sont adaptés pour détecter un blocage en position ouverte dudit injecteur lorsque ladite pression d'alimentation en carburant dudit injecteur est inférieure à ladite pression d'erreur prédéterminée.

En outre, le système peut comprendre des moyens de désactivation pour désactiver lesdits moyens de détection lorsqu'un défaut de fonctionnement électrique dudit capteur de mesure de la pression d'alimentation en carburant dudit injecteur est détecté, lorsqu'un défaut de fonctionnement électrique dudit injecteur est détecté, lorsqu'un défaut de fonctionnement électrique de ladite pompe est détectée, ou lorsque ladite pompe est désactivée.

En d'autres termes, les moyens de détection détectent un défaut de fonctionnement de l'injecteur lorsqu'il doit se fermer, et qu'il reste bloqué ouvert. Il est alors possible de détecter une défaillance de fonctionnement d'un tel système de régénération d'un filtre à particules catalytique et ainsi de pouvoir éviter des défaillances d'un tel système. La sécurité des occupants du véhicule est ainsi améliorée.

Avantageusement, lesdits moyens de détection sont adaptés pour stopper toute phase de régénération du filtre à particules catalytique lorsque lesdits moyens de détection détectent un blocage en position ouverte dudit injecteur.

Les risques d'accident par injection de carburant à des températures trop élevées sont ainsi diminués.

Selon un autre aspect de l'invention, il est également proposé un procédé de régénération d'un filtre à particules catalytique situé dans la ligne d'échappement d'un moteur diesel, caractérisé par le fait qu'on détecte un blocage en position ouverte dudit injecteur, à partir de la pression d'alimentation en carburant d'un injecteur de carburant commandé disposé en amont du filtre à particules catalytique et alimenté en carburant par une pompe.

Dans ce procédé, on détermine un délai de chute de la pression d'alimentation en carburant dudit injecteur d'une pression prédéterminée supérieure à une pression prédéterminée inférieure lorsque la pompe d'alimentation est désactivée.

D'autres buts, caractéristiques et avantages de l'invention apparaîtront à la lecture de la description suivante, de quelques exemples nullement limitatifs, et faite en référence aux dessins annexés, sur lesquels :
- la figure 1 est un schéma synoptique d'un premier mode de réalisation d'un système selon un aspect de l'invention ;
- la figure 2 est schéma synoptique d'un deuxième mode de réalisation d'un système selon un aspect de l'invention ; et
- la figure 3 est un schéma synoptique illustrant l'état d'activation de la pompe, l'état de l'injecteur, et la pression d'alimentation en carburant de l'injecteur en fonctionnement normal et lors d'un blocage en position ouverte de l'injecteur.

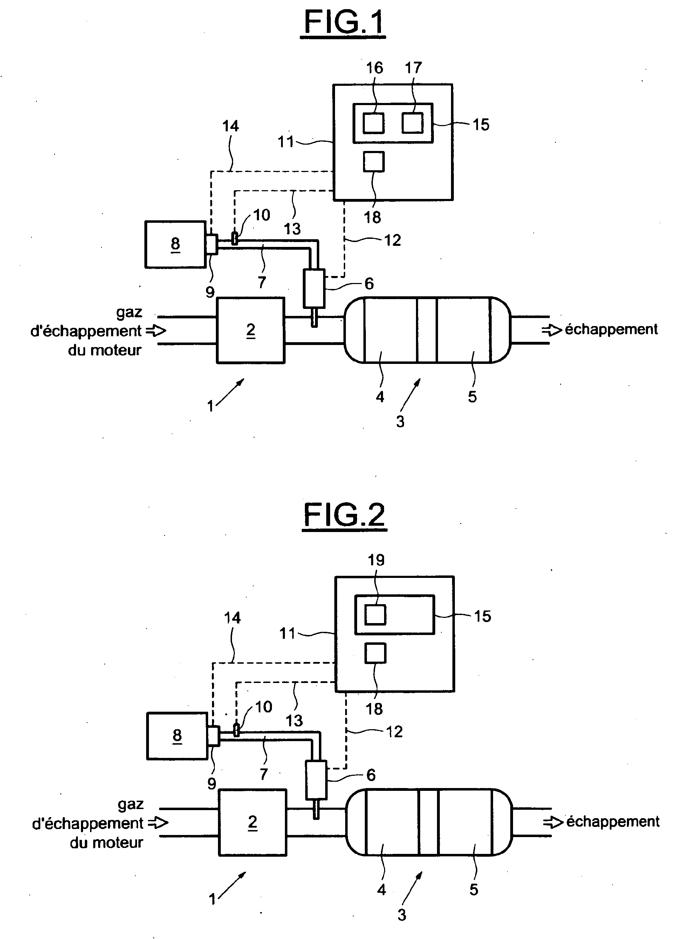

Sur la figure 1, la ligne d'échappement 1 d'un véhicule automobile équipé d'un moteur diesel, comprend un dispositif catalytique 2 d'oxydation des hydrocarbures et du monoxyde de carbone.

La ligne d'échappement comprend également un filtre à particules catalytique 3, comprenant un catalyseur d'oxydation 4 et un filtre à particules 5.

Un injecteur 6 pulvérise du carburant en amont du catalyseur d'oxydation 4. Le catalyseur d'oxydation 4 est sollicité périodiquement pendant les phases de régénération du filtre à particules 5 pour créer di la chaleur permettant la régenération de réchauffer les gaz d'échappement l'injecteur 6 est alimenté en carburant par l'intermédiaire d'un conduit 7 reliant l'injecteur 6 à un réservoir de carburant 8. Une pompe à carburant 9 permet de fournir du carburant sous pression à l'injecteur 6 par le conduit 7.

Le conduit d'alimentation en carburant 7 est équipé d'un capteur 10 de mesure de la pression d'alimentation P en carburant de l'injecteur 6.

L'injecteur 6, le capteur 10 et la pompe 9 sont respectivement connectés à une unité de commande électronique 11 par des connexions 12, 13 et 14.

L'unité de commande électronique 11 comprend un module de détection 15 d'un blocage en position ouverte de l'injecteur 6, à partir de la pression d'alimentation P en carburant de l'injecteur 6 mesurée par le capteur de pression 10.

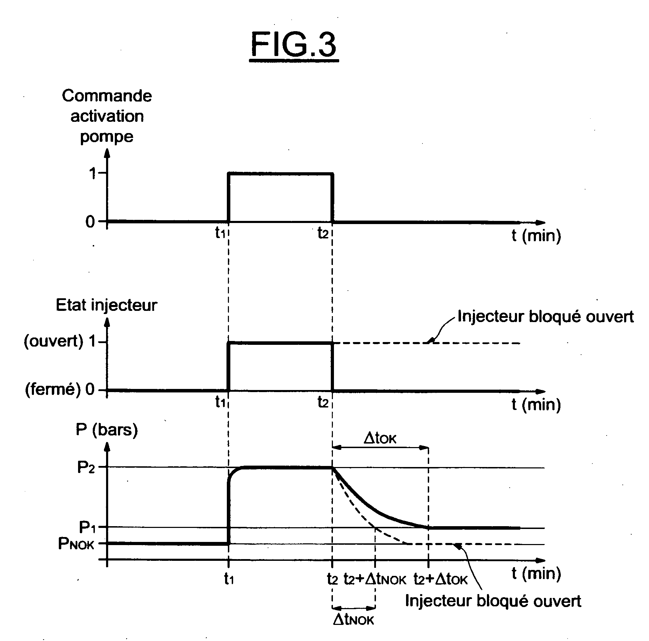

Le module de détection 15 comprend un module de détermination de délai 16 pour déterminer un délai Δt de chute de la pression d'alimentation P en carburant de l'injecteur 6 d'une pression prédéterminée supérieure P₂ à une pression prédéterminée inférieure P₁. La pression prédéterminée inférieure P₁ est inférieure à la pression prédéterminée supérieure P₂ (figure 3).

Le module de détection 15 comprend des moyens de comparaison de délai 17 pour comparer ledit délai Δt de chute et un délai de chute prédéterminé Δtₒₖ.

Le module de détection 15 détecte un blocage en position ouverte dudit injecteur 6 lorsque ledit délai Δt de chute est inférieur audit délai de chute prédéterminé Δtₒₖ. En effet une telle chute de pression plus rapide que celle d'un fonctionnement normal indique la présence d'un tel blocage en position d'ouverture de l'injecteur (figure 3).

En outre, le système comprend un module de désactivation 18 pour désactiver le module de détection 15 lorsqu'un défaut de fonctionnement électrique du capteur 10 de mesure de la pression d'alimentation P en carburant de l'injecteur 6 est détecté, lorsqu'un défaut de fonctionnement électrique de l'injecteur 6 est détecté, lorsqu'un défaut de fonctionnement électrique de la pompe 9 est détectée, ou lorsque la pompe 9 est désactivée.

En effet, lorsque de tels événements sont détectés, le diagnostic de fonctionnement de l'injecteur est peu fiable.

En outre, les moyens de détection 15 stoppent toute phase de régénération du filtre à particules catalytique 3 lorsqu'ils détectent un blocage en position ouverte dudit injecteur 6.

La figure 2 représente un système similaire à celui de la figure 1, privé des modules 16 et 17 de détermination de délai et de comparaison de délai. Le système comprend, en outre, un module de comparaison de pression 19 pour comparer la pression d'alimentation P en carburant dudit injecteur 6 avec une pression d'erreur prédéterminée Pₙₒₖ, inférieure à la pression prédéterminée inférieure P₁ (figure 3).

Les moyens de détection 1 détectent un blocage en position ouverte de l'injecteur 6 lorsque la pression d'alimentation P en carburant de l'injecteur 6 est inférieure à la pression d'erreur prédéterminée Pₙₒₖ (figure 3).

Bien entendu, le système pourrait comprendre les deux modes de détection de blocage de l'injecteur 6 à l'état ouvert décrit précédemment.

La figure 3 est un schéma de principe de l'évolution de la pression d'alimentation P en carburant de l'injecteur 6 en fonction de l'activation et de la désactivation de la pompe 9 d'alimentation en carburant de l'injecteur 6. L'état de l'injecteur, ouvert ou fermé, est également représenté.

A un instant t₁, on commande l'activation de la pompe 9. Instantanément, la pression d'alimentation P en carburant de l'injecteur 6 passe de la valeur P₁ à la valeur P₂, et l'injecteur 6 passe d'un état fermé 0 à un état ouvert 1.

La pression d'alimentation P en carburant de l'injecteur 6 est mesurée par le capteur 10 de mesure de la pression P en carburant dans le conduit 7. Par exemple, la valeur P₁ est de l'ordre de 3 bars, la valeur P₂ de l'ordre de 5,5 bars, et la valeur de Pₙₒₖ comprise entre 1 et 2 bars.

La pression d'alimentation P en carburant de l'injecteur 6 reste stable à la valeur P₂, jusqu'à un instant t₂ auquel on commande une désactivation de la pompe à carburant 9.

Lors d'un fonctionnement correct de l'injecteur 6, la pression d'alimentation P en carburant de l'injecteur 6 décroît pendant une durée Δtₒₖ jusqu'à atteindre la valeur P₁.

La portion de courbe en pointillés illustre un blocage de l'injecteur 6 dans l'état ouvert. La pression P d'alimentation en carburant de l'injecteur 6 décroît de la valeur P₂ à la valeur Pₙₒₖ et se stabilise à cette valeur.

Elle passe alors par la valeur P₁ à un instant t₂+ Δtₙₒₖ, avec Δtₙₒₖ inférieur à Δtₙₒₖ.

La présente invention permet de détecter un blocage en position d'ouverture d'un injecteur disposé en amont d'un filtre à particules catalytique, et ainsi d'améliorer le contrôle du fonctionnement des phases de régénération du filtre.

## Revendications

1. Système de régénération d'un filtre à particules catalytique (3) situé dans la ligne d'échappement (1) d'un moteur diesel, comprenant une unité de commande électronique (11), un injecteur de carburant commandé (6) disposé en amont du filtre à particules catalytique (3) et alimenté en carburant par une pompe commandée (9), et un capteur (10) de mesure de la pression d'alimentation (P) en carburant dudit injecteur (6), **caractérisé par le fait qu'**il comprend des moyens de détection (15) d'un blocage en position ouverte dudit injecteur (6) à partir de la pression d'alimentation (P) en carburant dudit injecteur (6), et que lesdits moyens de détection (15) comprennent des moyens de détermination de délai (16) pour déterminer un délai (Δt) de chute de la pression d'alimentation (P) en carburant dudit injecteur (6) d'une pression prédéterminée supérieure (P₂) à une pression prédéterminée inférieure (P₁) lorsque la pompe commandée (9) est désactivée.

2. Système selon la revendication 1, dans lequel lesdits moyens de détection (15) comprennent des moyens de comparaison de délai (17) pour comparer ledit délai (Δt) de chute et un délai de chute prédéterminé (Δtₒₖ).

3. Système selon la revendication 2, dans lequel lesdits moyens de détection (15) sont adaptés pour détecter un blocage en position ouverte dudit injecteur (6) lorsque ledit délai (Δt) de chute est inférieur audit délai de chute prédéterminé (Δtₒₖ).

4. Système selon l'une quelconque des revendications précédentes, dans lequel lesdits moyens de détection (15) comprennent des moyens de comparaison de pression (19) pour comparer la pression d'alimentation (P) en carburant dudit injecteur (6) et une pression d'erreur prédéterminée (Pₙₒₖ), inférieure à ladite pression prédéterminée inférieure (P₁).

5. Système selon la revendications 4, dans lequel lesdits moyens de détection (15) sont adaptés pour détecter un blocage en position ouverte dudit injecteur (6) lorsque ladite pression d'alimentation (P) en carburant dudit injecteur (6) est inférieure à ladite pression d'erreur prédéterminée (Pₙₒₖ).

6. Système selon l'une quelconque des revendications précédentes, comprenant, en outre, des moyens de désactivation (18) pour désactiver lesdits moyens de détection (15) lorsqu'un défaut de fonctionnement électrique dudit capteur (10) de mesure de la pression d'alimentation (P) en carburant dudit injecteur (6) est détecté, lorsqu'un défaut de fonctionnement électrique dudit injecteur (6) est détecté, lorsqu'un défaut de fonctionnement électrique de ladite pompe (9) est détectée, ou lorsque ladite pompe (9) est désactivée.

7. Système selon l'une quelconque des revendications précédentes, dans lequel lesdits moyens de détection (15) sont adaptés pour stopper toute phase de régénération du filtre à particules catalytique (3) lorsque lesdits moyens de détection (15) détectent un blocage en position ouverte dudit injecteur (6).

8. Procédé de régénération d'un filtre à particules catalytique (3) situé dans la ligne d'échappement (1) d'un moteur diesel, **caractérisé par le fait qu'**on détecte un blocage en position ouverte dudit injecteur (6), à partir de la pression d'alimentation (P) en carburant d'un injecteur (6) de carburant commandé disposé en amont du filtre à particules catalytique (3) et alimenté en carburant par une pompe (9), et on déterminer un délai (Δt) de chute de la pression d'alimentation (P) en carburant dudit injecteur (6) d'une pression prédéterminée supérieure (P₂) à une pression prédéterminée inférieure (P₁) lorsque ladite pompe (9) est désactivée.

## Claims

1. System for regenerating a catalytic particulate filter (3) located in the exhaust line (1) of a diesel engine, comprising an electronic control unit (11), a controlled fuel injector (6) located upstream of the catalytic particulate filter (3) and supplied with fuel by a controlled pump (9), and a sensor (10) for measuring the pressure (P) at which said injector (6) is supplied with fuel, **characterized in that** it comprises means (15) of detecting that said injector (6) is stuck in the open position on the basis of the pressure (P) at which said injector (6) is supplied with fuel, and **in that** said detection means (15) comprise time determining means (16) for determining the time (Δt) it takes for the pressure (P) at which said injector (6) is supplied with fuel to drop from a predetermined upper pressure (P₂) to a predetermined lower pressure (P₁) when the controlled pump (9) is deactivated.

2. System according to Claim 1, in which said detection means (15) comprise time comparison means (17) for comparing said drop time (Δt) against a predetermined drop time (Δtₒₖ).

3. System according to Claim 2, in which said detection means (15) are designed to detect that said injector (6) is stuck in the open position when said drop time (Δt) is shorter than said predetermined drop time (Δtₒₖ).

4. System according to any one of the preceding claims, in which said detection means (15) comprise pressure comparison means (19) for comparing the pressure (P) at which said injector (6) is supplied with fuel against a predetermined error pressure (Pₙₒₖ), lower than said predetermined lower pressure (P₁).

5. System according to Claim 4, in which said detection means (15) are designed to detect that said injector (6) is stuck in the open position when said pressure (P) at which said injector (6) is supplied with fuel is lower than said predetermined error pressure (Pₙₒₖ).

6. System according to any one of the preceding claims, further comprising deactivation means (18) for deactivating said detection means (15) when an electrical operating fault with said sensor (10) that measures the pressure (P) at which said injector (6) is supplied with fuel is detected, when an electrical operating fault with said injector (6) is detected, when an electrical operating fault with said pump (9) is detected, or when said pump (9) is deactivated.

7. System according to any one of the preceding claims, in which said detection means (15) are designed to stop any phase of regenerating the catalytic particulate filter (3) when said detection means (15) detect that said injector (6) is stuck in the open position.

8. Method for regenerating a catalytic particulate filter (3) located in the exhaust line (1) of a diesel engine, **characterized in that** the fact that said injector (6) is stuck in the open position is detected from the pressure (P) at which fuel is supplied to a controlled fuel injector (6) located upstream of the catalytic particulate filter (3) and supplied with fuel by a pump (9), and the time (Δt) it takes for the pressure (P) at which said injector (6) is supplied with fuel to drop from a predetermined upper pressure (P₂) to a predetermined lower pressure (P₁) when said pump (9) is deactivated is determined.

## Patentansprüche

1. System zur Regeneration eines katalytischen Partikelfilters (3), der sich in der Auspuffanlage (1) eines Dieselmotors befindet, mit einer elektronischen Steuereinheit (11), mit einem gesteuerten Kraftstoffinjektor (6), der vor dem katalytischen Partikelfilter (3) angeordnet ist und von einer gesteuerten Pumpe (9) mit Kraftstoff versorgt wird, und mit einem Sensor (10) zur Messung des Kraftstoffversorgungsdrucks (P) des Injektors (6), **dadurch gekennzeichnet, dass** es Einrichtungen (15) zur Erfassung einer Blockierung des Injektors (6) in offener Stellung ausgehend vom Kraftstoffversorgungsdruck (P) des Injektors (6) enthält, und dass die Erfassungseinrichtungen (15) Einrichtungen zur Verzögerungsbestimmung (16) enthalten, um eine Verzögerung (Δt) des Abfalls des Kraftstoffversorgungsdrucks (P) des Injektors (6) von einem vorbestimmten höheren Druck (P₂) auf einen vorbestimmten niedrigeren Druck (P₁) zu bestimmen, wenn die gesteuerte Pumpe (9) deaktiviert wird.

2. System nach Anspruch 1, bei dem die Erfassungseinrichtungen (15) Einrichtungen zum Verzögerungsvergleich (17) enthalten, um die Abfallverzögerung (Δt) und eine vorbestimmte Abfallverzögerung (Δtₒₖ) zu vergleichen.

3. System nach Anspruch 2, bei dem die Erfassungseinrichtungen (15) geeignet sind, um eine Blockierung des Injektors (6) in offener Stellung zu erfassen, wenn die Abfallverzögerung (Δt) niedriger als die vorbestimmte Abfallverzögerung (Δtₒₖ) ist.

4. System nach einem der vorhergehenden Ansprüche, bei dem die Erfassungseinrichtungen (15) Druckvergleichseinrichtungen (19) enthalten, um den Kraftstoffversorgungsdruck (P) des Injektors (6) mit einem vorbestimmten Fehlerdruck (Pₙₒₖ) zu vergleichen, der niedriger ist als der niedrige vorbestimmte Druck (P₁).

5. System nach Anspruch 4, bei dem die Erfassungseinrichtungen (15) geeignet sind, um eine Blockierung des Injektors (6) in offener Stellung zu erfassen, wenn der Kraftstoffversorgungsdruck (P) des Injektors (6) niedriger ist als der vorbestimmte Fehlerdruck (Pₙₒₖ).

6. System nach einem der vorhergehenden Ansprüche, das außerdem Deaktivierungseinrichtungen (18) enthält, um die Erfassungseinrichtungen (15) zu deaktivieren, wenn ein elektrischer Betriebsfehler des Sensors (10) zum Messen des Kraftstoffversorgungsdrucks (P) des Injektors (6) erfasst wird, wenn ein elektrischer Betriebsfehler des Injektors (6) erfasst wird, wenn ein elektrischer Betriebsfehler der Pumpe (9) erfasst wird, oder wenn die Pumpe (9) deaktiviert ist.

7. System nach einem der vorhergehenden Ansprüche, bei dem die Erfassungseinrichtungen (15) geeignet sind, um jede Regenerationsphase des katalytischen Partikelfilters (3) zu stoppen, wenn die Erfassungseinrichtungen (15) eine Blockierung des Injektors (6) in offener Stellung erfassen.

8. Verfahren zur Regeneration eines katalytischen Partikelfilters (3), der sich in der Auspuffanlage (1) eines Dieselmotors befindet, **dadurch gekennzeichnet, dass** eine Blockierung des Injektors (6) in offener Stellung ausgehend von dem Kraftstoffversorgungsdruck (P) eines gesteuerten Kraftstoffinjektors (6) erfasst wird, der sich vor dem katalytischen Partikelfilter (3) befindet und von einer Pumpe (9) mit Kraftstoff versorgt wird, und eine Verzögerung (Δt) des Abfalls des Kraftstoffversorgungsdrucks (P) des Injektors (6) von einem vorbestimmten höheren Druck (P₂) auf einen vorbestimmten niedrigeren Druck (P₁) bestimmt wird, wenn die Pumpe (9) deaktiviert wird.
